# EUROPEAN PATENT APPLICATION

(11) **EP 3 711 882 A1**
(43) Date of publication of application: **23.09.2020**
(21) Application number: 20165019.9
(22) Date of filing: 23.03.2020
(51) Int. Cl.: B22F 3/105, B22F 5/04, B22F 7/06, B22F 7/08, F01D 5/14, F01D 5/18, F04D 29/32

(54) **METHOD OF MANUFACTURING A MULTI-COMPONENT ARTICLE**

(30) Priority: 22.03.2019 US 201916362071
(71) Applicant: United Technologies Corporation, Farmington, CT 06032 (US)
(72) Inventor: DRESCHER, Joseph D., Middletown, CT Connecticut 06457 (US)
(74) Representative: Dehns

(57) **Abstract**

A method of manufacturing an article having a first component that mates with a second component is provided. The method includes: producing a first component having a first mating feature; measuring the dimensions of the first mating feature and creating a profile representative of the measured dimensions; and producing a second component having a second mating feature that mates with the first mating feature, wherein the second mating feature is produced using the profile.

## Description

### BACKGROUND OF THE INVENTION

### 1. Technical Field

The present disclosure relates to manufacturing methods in general, and to methods for manufacturing articles having a plurality of components in particular.

### 2. Background Information

Prior art methods for manufacturing an article having a plurality of components often suffer from problems associated with dimensional variability. Each separately manufactured component will be subject to dimensional variations. If the article requires the two components to be fitted together, component dimensional variations can create an unacceptable fit between the two components. A fan blade for a gas turbine engine is an example of an article having a plurality of components. Conventional fan blades for a turbofan gas turbine engine are a solid structure made from a metal such as aluminum or titanium. A person of skill in the art will realize that solid fan blades, particularly those utilized in high bypass gas turbine engines can add considerable cost and weight to the gas turbine engine. To mitigate the weight of a solid fan blade, it is known that a fan blade may be configured as a metal body having one or more internal cavities, sometimes referred to as a "hollow" fan blade. A porous or honeycomb type structure, or other non-solid structure (e.g., a "filler material body") is disposed within each cavity, and a cover panel is affixed (e.g., by brazing, bonding or welding) to the fan blade body to enclose the filler material body and complete the aerodynamic external surface of the hollow fan blade. The filler material body is lighter than a similar shaped solid metal body shape and thereby reduces the weight of the hollow fan blade. During a typical manufacturing process of a hollow gas turbine engine, therefore, a fan blade body having an internal cavity is produced independently of a filler material body. If the internal cavity is manufactured with one or more dimensions too small and the filler material body is manufactured with one or more dimensions too large, it may not be possible to insert the filler material body into the internal cavity; i.e., an interference fit. To avoid scrapping the fan blade body or the filler material body, one or both will need to be reworked to enable insertion of the filler material body into the internal cavity. Conversely, if the internal cavity is manufactured with one or more dimensions too large and the filler material body is manufactured with one or more dimensions too small, the fit between the filler material body and the internal cavity may be unacceptable.

What is needed is a method for manufacturing method that is an improvement over existing manufacturing methods.

### SUMMARY OF THE INVENTION

According to an aspect of the present disclosure, a method of manufacturing an article having a first component that mates with a second component is provided. The method includes: producing a first component having a first mating feature; measuring the dimensions of the first mating feature and creating a profile representative of the measured dimensions; and producing a second component having a second mating feature that mates with the first mating feature, wherein the second mating feature is produced using the profile.

According to another aspect of the present disclosure, a method of manufacturing an article having a first component that mates with a second component is provided. The method includes: producing a first component having a first mating feature; measuring the dimensions of the first mating feature and creating a profile representative of the measured dimensions; producing a second component having a second mating feature; and removing material from the second mating feature based on the profile to produce a modified second mating feature mates with the first mating feature.

In any of the aspects or embodiments described above and herein, the first mating feature may be a three-dimensional feature, and the created profile may be a three-dimensional representation of the first mating feature.

In any of the aspects or embodiments described above and herein, the first mating feature may be a male or female portion of a mating pair, and the second mating feature is the other of the male or female portion of the mating pair.

In any of the aspects or embodiments described above and herein, the method may further comprise assigning a first specific identifier to the first component, a second specific identifier to the second component, and assembling the first component with the first specific identifier with the second component with the second specific identifier.

In any of the aspects or embodiments described above and herein, the second component having the second mating feature that mates with the first mating feature may be produced using the profile in an additive manufacturing process.

In any of the aspects or embodiments described above and herein, the first component may be a hollow fan blade and the first mating feature may be an internal cavity disposed in an airfoil portion of the hollow fan blade, and the second component may be a filler material body.

According to another aspect of the present disclosure, a method of manufacturing a hollow fan blade is provided. The method includes: producing a hollow fan blade body having an airfoil with an external surface, and an internal cavity disposed within the airfoil and open to the external surface; measuring the dimensions of the internal cavity of the hollow fan blade body and creating a profile based on the measured dimensions; producing a filler material body using the profile; inserting the filler material body into the internal cavity; and attaching a cavity cover over the internal cavity to enclose the filler material body within the internal cavity.

In any of the aspects or embodiments described above and herein, the filler material body may be produced using an additive material process.

In any of the aspects or embodiments described above and herein, the external surface of the airfoil may be a suction side surface and the internal cavity is open to the suction side surface of the airfoil.

In any of the aspects or embodiments described above and herein, the step of producing the filler material body using the dimensional profile may include producing an oversized filler material body and finish forming the filler material body using the dimensional profile.

In any of the aspects or embodiments described above and herein, the hollow fan blade body having said internal cavity may be assigned a unique fan blade identifier.

In any of the aspects or embodiments described above and herein, the filler material body produced using the dimensional profile may be assigned to the hollow fan blade body with the dimensionally measured internal cavity and the unique fan blade identifier.

In any of the aspects or embodiments described above and herein, the filler material body produced using the dimensional profile may be assigned a unique filler material body identifier.

In any of the aspects or embodiments described above and herein, the method may further include matching the filler material body with the unique filler material body identifier with the hollow fan blade body having the unique fan blade identifier prior to the inserting step.

In any of the aspects or embodiments described above and herein, the step of inserting the filler material body into the internal cavity may include inserting the filler material body with the unique filler material body identifier into the internal cavity of the hollow fan blade body having the unique fan blade identifier.

### BRIEF DESCRIPTION OF THE DRAWINGS

FIG. 1 is a diagrammatic partially sectioned view of a gas turbine engine.
FIG. 2 is a diagrammatic view of a fan stage.
FIG. 3 is a diagrammatic perspective view of a fan blade.
FIG. 4 is a sectional view of an embodiment of an airfoil portion of the fan blade shown in FIG. 3.
FIG. 5 is a sectional view of an embodiment of an airfoil portion of the fan blade shown in FIG. 3.
FIG. 6 is a diagrammatic perspective exploded view of a fan blade.
FIG. 7 is a diagrammatic perspective view of a filler material body.
FIG. 8 is a flow chart of a method embodiment according to the present disclosure.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical and/or mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented.

Aspects of the present disclosure are directed to methods for manufacturing an article having a plurality of components. The present methods may be utilized to manufacture a variety of different articles, and are not therefore limited to manufacturing any particular article. To enable a full appreciation of the present disclosure, aspects of the present disclosure are described herein in terms of manufacturing a hollow fan blade for a gas turbine engine. This is a non-limiting example.

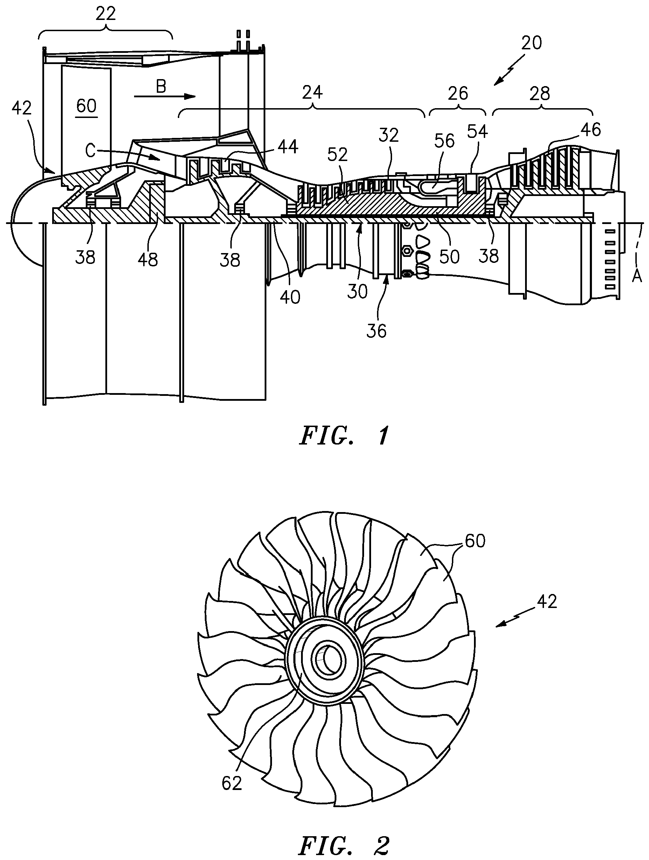

FIG. 1 schematically illustrates an example gas turbine engine 20 that includes a fan section 22, a compressor section 24, a combustor section 26 and a turbine section 28. The fan section 22 drives air along a bypass flow path B while the compressor section 24 draws air in along a core flow path C where the air is compressed and communicated to the combustor section 26. In the combustor section 26, the air is mixed with fuel and ignited to generate a high pressure exhaust gas stream that expands through the turbine section 28 where energy is extracted and utilized to drive the fan section 22 and the compressor section 24. Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. The low speed spool 30 generally includes an inner shaft 40 that connects a fan stage 42 and a low pressure compressor section 44 to a low pressure turbine section 46. The inner shaft 40 drives the fan stage 42 through a speed change device, such as geared architecture 48, to drive the fan stage 42 at a lower rotational speed than the rotational speed of the low speed spool 30. The high-speed spool 32 includes an outer shaft 50 that interconnects a high pressure compressor section 52 and a high pressure turbine section 54. The inner shaft 40 and the outer shaft 50 are concentric and rotate via bearing systems 38 about engine central longitudinal axis A.

The combustor 56 is arranged between the high pressure compressor 52 and the high pressure turbine 54. The core airflow C is compressed by low pressure compressor 44 and by the high pressure compressor 52. The compressed airflow is subsequently mixed with fuel and ignited in combustor 56 to produce high speed exhaust gases that are then expanded through high pressure turbine 54 and low pressure turbine 46.

The disclosed gas turbine engine 20 in one example is a high-bypass geared aircraft engine. In a further example, the gas turbine engine 20 may include a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

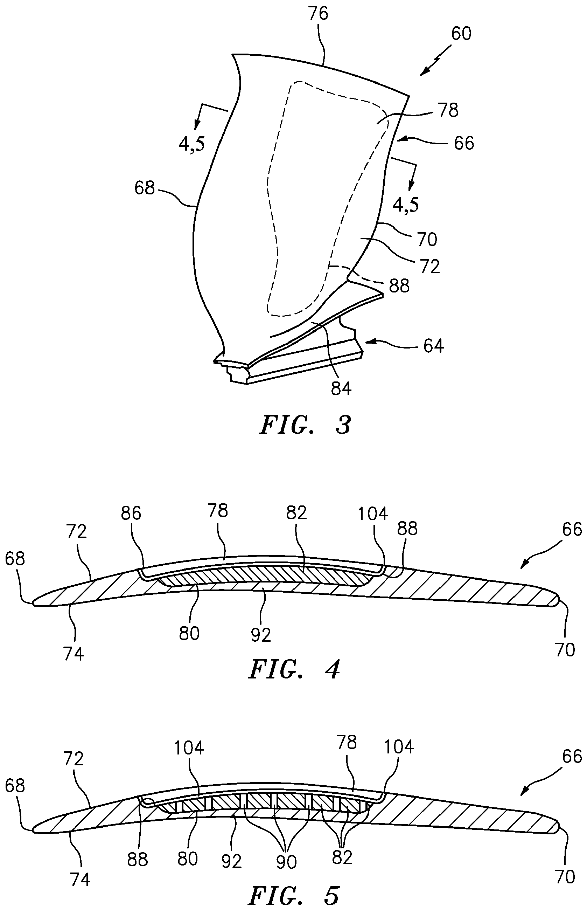

Referring to FIG. 2, a fan stage 42 disposed within a fan section 22 of a gas turbine engine may include a plurality of hollow fan blades 60 attached to a hub 62. In the hollow fan blade 60 embodiment shown in FIG. 3, a hollow fan blade 60 is configured for mechanical attachment to the hub 62 via a root 64 that is received within a mating slot (not shown) disposed within the hub 62. In alternative embodiments, a fan blade 60 may be integrally attached to the hub 62 and therefore may not include a root 64. The present disclosure is not limited to any particular fan blade hub attachment configuration.

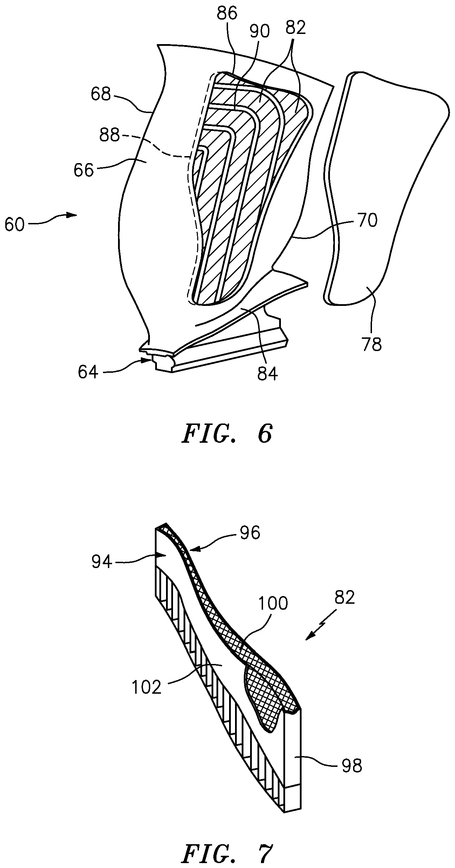

Referring to FIGS. 3-6, the hollow fan blade 60 includes an airfoil 66 having a leading edge 68, a trailing edge 70, a suction side surface 72, a pressure side surface 74 (e.g., see FIG. 4 and 5), a tip end 76, a cavity cover 78, at least one internal cavity 80, and a filler material body 82 disposed within the at least one internal cavity 80. The hollow fan blade 60 embodiment shown in FIGS. 3 and 6 also includes a platform 84. The platform 84 provides an inner radial flow path boundary for air passing through the fan stage 42. In some embodiments, the fan blades 60 within a fan stage 42 may not include platforms 84. The hollow fan blade 60 may be made from a variety of different materials, including but not limited to a titanium alloy or an aluminum alloy. The present disclosure is not limited to fan blades 60 comprising any particular type of material.

The airfoil pressure side surface 74 is disposed opposite the suction side surface 72. On their respective opposite sides, the pressure and suction side surfaces 74, 72 extend radially between the tip end 76 and the platform 84, and between the leading edge 68 and the trailing edge 70. The leading edge 68 and the trailing edge 70 extend span wise typically in a curved manner between the platform 84 and the tip end 76.

During manufacture, the at least one internal cavity 80 may be formed within the region of the airfoil 66 disposed between the pressure side surface 74 and the suction side surface 72, open to an exterior surface (e.g., the pressure side surface 74 or the suction side surface 72). The portion of the exterior surface through which the internal cavity 80 is accessible may be referred to as the cavity opening 86. The internal cavity(ies) 80 may be formed within the airfoil 66 in a variety of different ways (e.g., material removal by a machining process, etc.) and the present disclosure is not limited to any particular internal cavity 80 formation process.

In the blade embodiment shown in FIGS. 3-6, the cavity opening 86 is disposed in the suction side surface 72 of the airfoil 66. In alternative embodiments, the cavity opening 86 may be disposed in the pressure side surface 74 of the airfoil 66. The cavity cover 78 is configured to mate with the cavity opening 86, and when installed the cavity cover 78 encloses the internal cavity 80. The present disclosure is not limited to any particular mating configuration between the cavity cover 78 and the airfoil 66 at the cavity opening 86. A non-limiting example of a mating geometry between the cavity cover 78 and the airfoil 66 includes a shelf type surface (e.g., a socket 88) disposed around the perimeter of the cavity opening 86. The socket 88 is configured (e.g., with a width and a depth) so that a perimeter portion of the cavity cover 78 may be attached to and supported by the socket 88. In FIG. 3, the socket 88 is represented by a dashed line on the suction side surface 72. The present disclosure is not limited to any particular mating geometry between the socket 88 and the cavity cover 78.

The at least one internal cavity 80 within the airfoil 66 may be formed in a variety of different geometric configurations (e.g., a geometry that extends a span wise length, a chord wise distance, and a depth extending in a direction between the suction and pressure side surfaces 72, 74). The present disclosure is not limited to any particular internal cavity 80 geometric configuration. FIG. 4 diagrammatically illustrates an airfoil 66 having a single internal cavity 80. FIG. 5 diagrammatically illustrates an airfoil 66 having a plurality of internal cavities 80, with adjacent cavities 80 separated from one another by a rib 90. The ribs 90 may be configured to provide support to the cavity cover 78, the pressure side surface 74, or both.

The cavity cover 78 is typically a panel having a geometry that conforms with the geometry of the airfoil surface 72, 74 to which the cavity cover 78 is attached. The configuration of the cavity cover 78 (e.g., thickness, etc.) is typically chosen to withstand anticipated durability and/or mechanical strength requirements. In some embodiments, the cavity cover 78 may comprise the same metallic material as the airfoil 66. In other embodiments, the airfoil 66 and cavity cover 78 may comprise different materials (e.g., different alloys). If different materials are utilized, the different materials are typically chosen to have similar thermal expansion properties to prevent separation or buckling of the cavity cover 78 relative to the airfoil 66. The cavity cover 78 may be attached to the airfoil 66 in a variety of different ways (e.g., by brazing, bonding, or welding), and the present disclosure is not limited to any particular attachment mechanism.

The filler material body 82 disposed within the at least one internal cavity 80 may be a non-solid material (e.g., a "porous" material), sometimes referred to as a "foam". The filler material body 82 is typically chosen to have a lighter per unit volume weight than the airfoil 66 material, and to provide adequate structural support within the body of the airfoil 66; e.g., support for the cavity cover 78, or for the narrow portion 92 of the airfoil 66 opposite the cavity cover 78 that forms the base of the internal cavity 80, or both. To illustrate, FIG. 4 illustrates a filler material 82 disposed within an airfoil 66 having a cavity cover 78 attached to the suction side surface 72 of the airfoil 66. A narrow portion 92 of the airfoil 66 is disposed between the internal cavity 80 and the pressure side surface 74 of the airfoil 66. In this example, the filler material 82 may provide structural support for both the cavity cover 78 and the narrow portion 92 of the airfoil 66 disposed between the internal cavity 80 and the pressure side surface 74 of the airfoil 66.

Referring to FIG. 7, the filler material body 82 is configured to be received within the internal cavity 80. The geometry of the filler material body 82 will vary to suit the respective internal cavity 80. For example, the filler material body 82 shown in FIG. 7 is substantially rectangular in shape, and therefore is configured to fit in a corresponding substantially rectangular shaped internal cavity. A filler material body 82 configured to fit within an L-shaped internal cavity 80 such as that shown in shown in FIG. 6, in contrast, may have an L-shaped configuration. In many embodiments, a filler material body 82 may be described as having a first face surface 94, a second face surface 96 opposite the first face surface 94, and at least one edge surface 98 extending between the first and second face surfaces 94, 96. The filler material body 82 may include an internal structure 100 disposed between the first and second face surfaces 94, 96. The internal structure 100 may, for example, have a honeycomb type design defined by interconnecting planar elements and voids. The present disclosure is not limited to any particular internal structure 100 configuration; e.g., a tetrahedral honeycomb type structure is acceptable. In some embodiments, the filler material body 82 may include a solid material layer 102 disposed on the first face surface 94, or the second face surface 96, or an edge surface 98, or any combination thereof. The solid material layer 102 may cover a portion or all of any of the aforesaid surfaces 94, 96, 98.

A filler material body 82 for use within a hollow fan blade airfoil 66 may comprise a variety of different materials. The specific type(s) of materials used within a filler material body 82 may depend on the type of fan blade 60 and the use application of the fan blade 60. Hence, the present disclosure is not limited to filler material bodies 82 comprised of any particular type of material. Non-limiting examples of an acceptable filler material 82 for many applications is a foam comprising one or more of an aluminum or aluminum alloy, a nickel or nickel alloy, a titanium or titanium alloy, a magnesium or magnesium alloy, a steel alloy, or a polymer. The filler material body 82 may be produced using a variety of different manufacturing processes. For example, a filler material body 82 may be produced using an additive type manufacturing process that "prints" the filler material body 82 in layers, and the layers collectively form the filler material body 82. The present disclosure is not limited to any particular methodology for producing a filler material body 82.

Historically, hollow fan blades 60 have been manufactured by producing a fan blade body with a desired geometric configuration, including an internal cavity 80 held to tight geometric dimensions. In many instances, the machining process required to produce an internal cavity held to tight dimensions added to the cost and time required to produce the hollow fan blade, as well as increased the potential for scrapping the part. The aforesaid manufacturing processes were used to produce some number of fan blades; e.g., a production run. Each of these fan blades may be described as a particular part number (e.g., part number "HFB001"), and each would be identical other than differences attributable to manufacturing dimensional variations and/or tolerancing.

In similar fashion, filler material bodies historically have been manufactured to a desired geometric configuration defined by predetermined dimensions held to tight geometric dimensions. This manufacturing process was utilized to produce some number of filler material bodies; e.g., a production run. Each of these filler material bodies may be described as a particular part number (e.g., part number "FMB001"), and each would be identical other than differences attributable to manufacturing dimensional variations and/or tolerancing. These filler material bodies produced were intended to mate with the internal cavity 80 of the respective hollow fan blade.

Prior art hollow fan blade assembly procedures included inserting the appropriate filler material body (e.g., part number "FMB001") into the internal cavity of the corresponding hollow fan blade blank (e.g., part number "HFB001"). The mating "fit" between the two parts, however, was often problematic due to the manufacturing dimensional variations of both the internal cavity 80 of the hollow fan blade and the corresponding filler material body 82; e.g., the dimensional variation stack-up between the respective parts created an interference fit. If an interference fit was encountered, the typical prior art solution was to geometrically modify the filler material body (e.g., by a machining process, or by rolling operation) to overcome the interference fit. On the other hand, in those instances where a filler material body 82 was undersized due to dimensional variation stack-up, the filler material body 82 may have been rejected, and either shelved for later use with a different hollow fan blade 60 or discarded. The resulting manufacturing /assembly process was wasteful, time consuming, and costly.

According to an aspect of the present disclosure, a new novel and much improved method for manufacturing an article comprising a plurality of components such as a hollow fan blade was discovered. According to aspects of the present disclosure (using a hollow fan blade as a non-limiting example), a hollow fan blade 60 is producing with a desired geometric configuration, including the internal cavity 80 disposed within the airfoil 66. Once the hollow fan blade 60 is produced, the geometric dimensions of the internal cavity 80 are accurately measured (e.g., span wise length, chord wise width, depth, etc.) and a profile (e.g., in mathematical form) representative of all the necessary dimensions is produced (which profile may be referred to hereinafter as a "cavity profile"). This cavity profile is specific to the particular hollow fan blade body being measured; e.g., a "blade specific cavity profile". The cavity profile is produced using a metrologic technique that provides adequate accuracy; e.g., a metrologic technique having an accuracy that is an improvement over the dimensional accuracy associated with manufacturing methods used to produce the internal cavity of the hollow fan blade. The present disclosure is not limited to any particular metrologic technique for producing a cavity profile.

The blade specific cavity profile for a particular blade is subsequently utilized to produce a filler material body 82 for that particular fan blade 60. Hence, the present disclosure method includes producing a filler material body 82 to the actual dimensions of the blade internal cavity 80, rather than producing a filler material body 82 to a design configuration that does not directly account for the actual manufactured dimensions of the hollow fan blade internal cavity 80. The blade specific filler material body 82 may be assigned a filler material body serial number (e.g., "FMB001-0001"). During the hollow fan blade manufacturing process, the blade specific filler material body 82 (e.g., serial number "FMB001-0001") is assigned to the particular hollow fan blade 60 having the internal cavity 80 that was measured to produce the "blade specific cavity profile". As a result, the mating "fit" between the internal cavity 80 of the particular hollow fan blade 60 and the blade specific filler material body is greatly improved, thereby mitigating or eliminating the wasteful, time consuming, and costly process of having to geometrically modify the filler material body 82 to fit within an internal cavity 80 of a hollow fan blade body, or the possibility of scrapping an undersized filler material body 82.

In fact, the present disclosure methodologies can in some instances permit a relaxation of internal cavity 80 dimensional requirements of a hollow fan blade 60. For example in some instances, the mechanical property requirements of a hollow fan blade 60 may be satisfied with a greater dimensional variability than would be acceptable under prior art practices wherein the internal cavity 80 dimensional variability was driven by the need to "fit" the filler material body 82 within the internal cavity 80. The present disclosure method of producing a "blade specific cavity profile" for a particular hollow fan blade 60, and the corresponding blade specific filler material body 82, can permit a less exacting internal cavity 80 machining process; e.g., one that is less time consuming and more cost-effective. The present disclosure methodologies may also make it possible to "save" a hollow fan blade body 60 (e.g., a body having a dimensionally abnormal but otherwise acceptable internal cavity 80).

In some embodiments of the present disclosure, the blade specific filler material body 82 may be produced using an additive type manufacturing process that "prints" the blade specific material body 82 in layers, and the layers collectively form the blade specific filler material body 82. Additive manufacturing processes may be used that are capable of producing a blade specific filler material body 82 with tighter manufacturing dimension variability than is possible using conventional manufacturing processes.

In some embodiments of the present disclosure, a filler material body 82 blank may be produced that is slightly oversized for the internal cavity 80 of the type of hollow fan blade 60 being produced (e.g., a "generic blank"). In these embodiments, the filler material body 82 blank could be finished machined using the blade specific cavity profile to produce the blade specific filler material body 82; e.g., the blade specific filler material body 82 (e.g., serial number "FMB001-0001") for the particular hollow fan blade 60 (e.g., serial number "HFB001-0001") having the internal cavity 80 that was measured to produce the blade specific cavity profile.

In some embodiments, the hollow fan blade 60 may be assembled by applying a bonding agent 104 (e.g., an adhesive) to portions of the blade specific filler material body 82 that will contact surfaces of the internal cavity 80, and/or to portions of the blade specific filler material body 82 that will contact a surface of the cavity cover 78. The blade specific filler material body 82 is inserted into the internal cavity 80 and the cavity cover 78 is placed over the internal cavity 80 and attached to the airfoil 66 of the hollow fan blade 60. As stated above, the cavity cover 78 may be attached to the airfoil 66 of the hollow fan blade 60 using a variety of different techniques and the present disclosure is not limited to any particular technique.

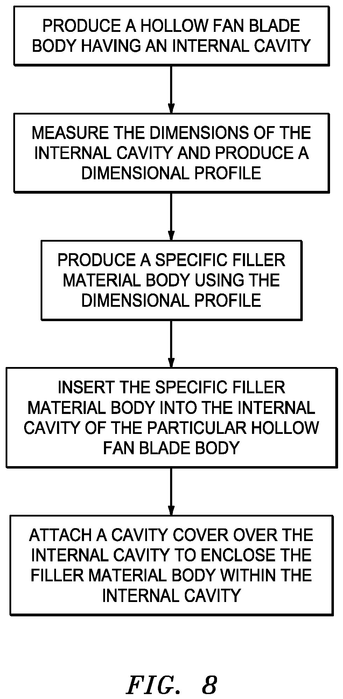

FIG. 8 is a flow chart that illustrates one or more present disclosure methodology embodiments for manufacturing a hollow fan blade 60. In a first step, a hollow fan blade body is produced that includes an airfoil 66 with an external surface, and an internal cavity 80 disposed within the airfoil 66 and open to the external surface. In a following step, the dimensions of the internal cavity 80 of the hollow fan blade body are measured and a blade specific cavity profile is created based on the measured dimensions. In a following step, a specific filler material body 82 is produced (or finally formed) using the blade specific cavity profile. In a following step, the specific filler material body 82 is inserted into the earlier measured internal cavity 80. In a following step, a cavity cover 78 is attached to the airfoil 66 over the internal cavity 80 to enclose the filler material body 82 within the internal cavity 80. As stated above, the above description of aspects of the present disclosure is provided in terms of a hollow fan blade article. The present disclosure methods are not limited to a hollow fan blade application.

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of manufacturing an article having a first component (60) that mates with a second component (82), comprising:
producing a first component (60) having a first mating feature (80);
measuring the dimensions of the first mating feature (80) and creating a profile representative of the measured dimensions; and
producing a second component (82) having a second mating feature that mates with the first mating feature (80), wherein the second mating feature is produced using the profile.

2. The method of claim 1, further comprising assigning a first specific identifier to the first component (60), a second specific identifier to the second component (82); and
assembling the first component (60) with the first specific identifier with the second component (82) with the second specific identifier.

3. The method of claim 1 or 2, wherein the first component (60) is a hollow fan blade (60) and the first mating feature (80) is an internal cavity (80) disposed in an airfoil portion (66) of the hollow fan blade (60); and
wherein the second component (82) is a filler material body (82).

4. A method of manufacturing an article having a first component (60) that mates with a second component (82), comprising:
producing a first component (60) having a first mating feature (80);
measuring the dimensions of the first mating feature (80) and creating a profile representative of the measured dimensions;
producing a second component (82) having a second mating feature; and
removing material from the second mating feature based on the profile to produce a modified second mating feature mates with the first mating feature (80).

5. The method of any preceding claim, wherein the first mating feature (80) is a three-dimensional feature, and the created profile is a three-dimensional representation of the first mating feature (80), wherein, optionally, the first mating feature (80) is a male or female portion of a mating pair, and the second mating feature is the other of the male or female portion of the mating pair.

6. The method of claim 4 or 5, further comprising:
assigning a first specific identifier to the first component (60);
assigning a second specific identifier to the second component (82) after the material is removed from the second mating feature based on the profile to produce the modified second mating feature mates with the first mating feature (80); and
assembling the first component (60) with the first specific identifier with the second component (82) with the second specific identifier.

7. The method of any preceding claim, wherein the second component (82) having the second mating feature that mates with the first mating feature (80) is produced using the profile in an additive manufacturing process.

8. A method of manufacturing a hollow fan blade (60), comprising:
producing a hollow fan blade body (60) having an airfoil (66) with an external surface (72), and an internal cavity (80) disposed within the airfoil (66) and open to the external surface (72);
measuring the dimensions of the internal cavity (80) of the hollow fan blade body (60) and creating a profile based on the measured dimensions;
producing a filler material body (82) using the profile;
inserting the filler material body (82) into the internal cavity (80); and
attaching a cavity cover (78) over the internal cavity (80) to enclose the filler material body (82) within the internal cavity (80).

9. The method of claim 8, wherein the filler material body (82) is produced using an additive material process.

10. The method of claim 8 or 9, wherein the external surface (72) of the airfoil (66) is a suction side surface (72) and the internal cavity (80) is open to the suction side surface (72) of the airfoil (66).

11. The method of any of claims 8 to 10, wherein the step of producing the filler material body (82) using the dimensional profile includes producing an oversized filler material body (82) and finish forming the filler material body (82) using the dimensional profile.

12. The method of any of claims 8 to 11, wherein the hollow fan blade body (60) having said internal cavity (80) is assigned a unique fan blade identifier.

13. The method of claim 12, wherein the filler material body (82) produced using the dimensional profile is assigned to the hollow fan blade body (60) with the dimensionally measured internal cavity (80) and the unique fan blade identifier.

14. The method of claim 12 or 13, wherein the filler material body (82) produced using the dimensional profile is assigned a unique filler material body identifier, wherein the method optionally further includes matching the filler material body (82) with the unique filler material body identifier with the hollow fan blade body (60) having the unique fan blade identifier prior to the inserting step.

15. The method of claim 14, wherein the step of inserting the filler material body (82) into the internal cavity (80) includes inserting the filler material body (82) with the unique filler material body identifier into the internal cavity (80) of the hollow fan blade body (60) having the unique fan blade identifier.
